(19) Europäisches Patentamt
European Patent Office
Office européen des brevets

(11) EP 2 103 972 B1

## (12) EUROPEAN PATENT SPECIFICATION

(45) Date of publication and mention
of the grant of the patent:
**23.04.2014 Bulletin 2014/17**

(51) Int Cl.:
**B60R 13/00** *(2006.01)*        **F21V 8/00** *(2006.01)*
**B60R 13/10** *(2006.01)*

(21) Application number: **08153148.5**

(22) Date of filing: **20.03.2008**

(54) **Light device comprising light guide**

Leuchte mit Lichtleiter

Dispositif d'éclairage comprenant un guide lumineux

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**23.09.2009 Bulletin 2009/39**

(73) Proprietor: **3M Innovative Properties Company
St. Paul MN 55144-1000 (US)**

(72) Inventor: **Eberwein, Arnold
B1831, Diegem (BE)**

(74) Representative: **Hohmann, Arno et al
3M ESPE AG
Office of Intellectual Property Counsel
Espe Platz
82229 Seefeld (DE)**

(56) References cited:
**EP-A- 1 512 583        WO-A-2007/092152
JP-A- 10 119 669        US-A1- 2007 006 493**

## Description

The present invention relates to a light device comprising a light guide coupled with a light source. In particular, the present invention relates to a light device for use of lighting indicia and in particular for lighting a license plate.

Commonly license plates for motor vehicles such as cars, busses and trucks and for trailers, typically can be illuminated by lights arranged on the vehicles. The license plates typically have indicia which thereby are made visible under conditions of low illumination such as ambient darkness or inside a poorly lit parking garage. Usually such indicia represent, for example, the license plate number issued by the appropriate national authorities. Typically, the lights for illumination of a license plate are arranged at the vehicles aside of the license plate so that its front face is not obscured by the lights and the license plate is visible from its front.

Such an arrangement has the disadvantage of limiting the design possibilities of car manufacturers, for example, because the license plate and the lights have to be arranged in a certain relationship that allows the light coming from the lights to reach the front face of the license plate. In particular, a vehicle design usually has to include a part for holding the lights which is arranged aside of the license plate but projects relative to the front face of the license plate. Therefore the car manufacturers are hindered in making more appealing designs, in particular they are limited in providing a flat design of the design portions that include the lights and the license plate. The parts holding the lights often also generally appear as a disturbing element in the design. Furthermore, such conventionally front-illuminated license plates may generally be illuminated non-uniformly so that recognition in the dark may be difficult, particularly under bad weather conditions such as rainfall. Also under rainfall conditions the retroreflection properties of the license plate may diminish making the license plate less visible, particularly when the illumination of the plate is non-uniform.

In recent years a variety of solutions for alternative illumination of license plates of vehicles have been disclosed or provided. In particular, a recent development relates to the use of so-called backlit license plates and internally illuminated license plates. Backlit license plates are typically light transmissive and a light source for illumination is arranged behind the license plate. Internally illuminated license plates typically have an integrated light source, for example a layer of light emitting material such as an electroluminescent film is arranged within the license plate.

A particularly interesting and useful light device for lighting a license plate number has been disclosed in EP 1 477 368. This European patent discloses an illuminated license plate for vehicles comprising a light guide having opposite major front and back faces and side faces there between, and an elongate light source arranged along at least a portion of at least one of the side faces of the light guide for illuminating the light guide. Furthermore, the illuminated license plate comprises a light-transmissive retro-reflective film and indicia, wherein the light-transmissive retro-reflective film and the indicia are arranged in front of the front face of the light guide.

US 2003/0128549 discloses a licence plate assembly comprising a 1 to 15 mm thick light pipe.

EP 1 512 583 discloses a license plate assembly comprising a light source and a license plate that is removably mounted to the light source. One of the light sources disclosed includes a light guide coupled with light emitting diodes.

WO 2007/092152 discloses a license plate assembly comprising: (i) a housing comprising a back plate and upstanding side walls defining a cavity; (ii) a light guide having first and second major sides that are opposite to each other and one or more side faces defining a thickness of said light guide, said light guide being disposed in said housing and being arranged on said back plate of said housing; (iii)a light source mounted along one or more side faces of said light guide; (iv)a transparent and retroreflective license plate mounted on said first major side of said light guide; and wherein a cushioning layer is provided between said back plate of said housing and said light guide. In one embodiment, the cushioning layer is a non-woven fibrous layer.

The light devices employing a light guide as disclosed in the above references offer the advantage that typically, these light devices can employ a light source that operates on low voltage, for example Light Emitting Diodes, and these light sources typically consume small amounts of energy. A desire however exists to further lower the thickness of the light guides used in the light devices. Such would makes the use of such light devices more attractive as it would make them for example more flexible and thus easier to integrate in various lighting designs. In particular, it would be an advantage to lower the overall thickness of a license plate assembly using a light guide based light device, thus making the light device and license plate assembly more apt to follow the contours of a vehicle body which may nowadays be somewhat curved. However, simply decreasing the thickness of the light guide will typically decrease the luminance of the light device. In particular in the context of use in a license plate, this may create problems as the minimum amounts of luminance that may be required by the relevant country authorities may no longer be achievable or might only be achievable while compromising the energy consumption.

Still further, the reduction of the thickness of the light guide may make the coupling of the light source, for example LEDs less optimal and may further make the manufacturing of the light device more cumbersome and/or more expensive.

It would now be desirable to develop a light device that is low in power consumption, can be manufactured in an easy and convenient way and/or can be manufactured at low cost. Still further, it would be desirable to develop a light device that offers more design flexibility and in particular a light device that offers more attractive design options. Still further, it would be desired to develop a light guide that has an improved flexibility and that can be bent more readily, thus allowing it to follow curved contours. It would be desired that a light device developed with one or more of these enhanced features still achieves a desired luminance, in particular achieves the luminance requirements prescribed by country authorities relative to illuminated license plates that may employ the light device.

In one aspect, the present invention provides a light device comprising (i) a light guide of transparent polymeric material having dispersed therein light scattering particles, said light guide having opposite first and second major sides and one or more side faces there between and having a thickness of less than 3 mm, (ii) a light source arranged along at least a portion of at least one side face of the light guide, (iii) a reflective layer arranged on the second major side of said light guide and (iv) a translucent non-woven fibrous layer arranged on said first major side of said light guide.

The light guide is adapted for illuminating indicia representing a licence plate number arranged on the first major side of the light device.

In a particular further aspect, the present invention provides a license plate assembly comprising the light device and indicia representing a license plate number arranged on the first major side of the light device and whereby there is further arranged a transparent or translucent retroreflective layer between the light device and the indicia representing the license plate number.

The light device in accordance with the present invention allows for easy and convenient manufacturing and reasonable or low manufacturing costs. For example, it has been found that the reflective layers on the side faces between the major surfaces of the light guide can readily be dispensed with, while still achieving desired luminance. Hence, the manufacturing cost can be lowered. Furthermore, the light device has excellent luminance notwithstanding the low thickness of the light guide used. Moreover, suitable and desired luminance can be achieved without the need to increase the number of light sources to illuminate the light guide and/or without the need to increase the power consumption. In particular, the light device is suitable to achieve light output as is or may be required by local authorities granting permits for license plates. Still further, the light device typically offers more attractive design options and has more flexibility. For example, the light device can be bent to follow curved contours and hence, license plate assemblies constructed therewith can more readily follow curved contours of a car or other motor vehicle, thus enhancing the appeal of vehicles including the license plate assembly.

The invention will be described in detail with reference to the following drawings which are included merely for illustrative purposes. Unless otherwise indicated, the drawings are schematic and features presented therein may not be to scale nor would their proportions to other features in the drawings be.

Figure 1 schematically represents a cross-section of an embodiment of a light device in accordance with the invention.
Figure 2 schematically represents an embodiment of the invention in which the light device is used to illuminate indicia.

In accordance with the present invention according to claim 1, the light device includes on its first major side a translucent non-woven fibrous layer. Typically, the fibers for use in the fibrous layer are selected to be refractive and/or reflective and scattering rather than absorbing the light. Suitable fibers for use in connection with the present invention include polymeric fibers such as polyolefin based fibers or polyester based fibers, glass fibers, ceramic fibers and metal fibers. Of course, it is also possible to use a blend of different fibers such a for example a blend of polymeric fibers and glass or ceramic fibers or a blend of polymeric fibers and metal fibers. A suitable translucent non-woven fibrous layer that may be used on the first side of the light guide includes a layer of Thinsulate™ non-woven material, commercially available from 3M Company. The non-woven fibrous layer should be translucent and preferably allows at least 20%, for example at least 50% of light to be passed through the fibrous layer. Generally, the non-woven fibrous layer will have a base weight of 20 g/m² to 500 g/m², for example between 50 g/m² and 250 g/m². It has further been found advantageous to compress the non-woven fibrous layer as this will typically further enhance the luminance of the light device. The non-woven fibrous layer may be compressed by at least 60%, for example at least 70% or even at least 80% of its uncompressed thickness. Thus, in a particular embodiment, the thickness of the non-woven fibrous layer in the light device may be between 0.2 and 5 mm, for example between 0.4 and 2 mm. The non-woven fibrous layer may for example be compressed by sandwiching the non-woven layer between the light guide and a further transparent cover layer, for example of an optional housing. In an alternative embodiment, the non-woven fibrous layer may be compressed and the fibres of the fibrous layer may be bonded together to hold the non-woven fibrous layer in its compressed state. Bonding may be achieved by including at least a portion of meltable fibers in the fibrous layer or by using thermoplastic fibers for the non-woven fibrous layer.

Typically, the non-woven fibrous layer will be arranged contiguous to the surface of the light guide on its first major side and in direct contact with the surface of the light guide. In other words, in one embodiment, the non-woven fibrous layer is in contact with the surface of the transparent polymeric material having dispersed therein light scattering particles out of which the light guide is constructed. However, such direct contact is not mandatory and it is also possible to leave for example an air gap between the fibrous layer and the light guide or to insert between the light guide and the non-woven fibrous layer a further transparent layer such as for example a transparent adhesive layer or a transparent polymeric film. Such additional transparent layers may be included for example to provide a desired color of the light device, i.e. the transparent layers may be colored translucent layers. Nevertheless, when an additional or additional transparent layers are included, consideration should be given to the fact that this may increase the overall thickness of the light device, which is preferably kept minimal. Also, depending on the thickness of the additional layer(s) the luminance of the light device may somewhat decrease. Hence, the thickness of the additional layer or layers between the light guide and the translucent non-woven fibrous layer on the first major side of the light guide is typically between 25 micrometers and 250 micrometers , for example between 50 micrometers and 125 micrometers.

Also, typically the thickness of the light device including the housing into which the light guide and translucent non-woven fibrous layer may be arranged together with optional further layers should be between 2 mm and 10 mm, for example between 3 and 7 mm. The thinner or slimmer the light device is, the more flexible the light device is and the more appealing will the light device be. Also, a thin light device will typically offer more possibilities in the applications where such a device can be used. Yet further, a thinner light device will also mean less weight and thus may help reduce fuel consumption of a car that includes such a light device for example as part of a license plate assembly.

The light guide of the light device comprises a transparent polymeric material having dispersed therein light scattering particles. The light guide has a thickness of less than 3 mm. Although the light guide will typically have a generally uniform thickness (within the normal tolerances), it is also contemplated to use a light guide having varying thickness along a side. For example, the light guide may have a wedge like shape. In case the light guide has a varying thickness, the thickness requirement according to the invention should be understood to mean the maximum thickness. Generally, the thickness of the light guide will be between 0.5 and 2 mm, for example between 1 and 1.5 mm.

In a particular embodiment, the light scattering particles used in the light guide have a refractive index different from the refractive index of the transparent polymeric material of which the light guide is made. Thus, the refractive index of the particles for providing light scattering in the light guide and refractive index of the transparent polymeric material forming the matrix in which the particles are dispersed are different from each other. The difference between the refractive indices can be chosen conveniently by one skilled in the art to obtain the optimal scattering of light within the polymeric matrix of the light guide and to achieve a desired uniform distribution of light in the light guide.

Generally the light scattering particles have a refractive index that is at least by 0.01 units different from the refractive index of the transparent polymeric material forming the matrix in which the particles are dispersed. For example the particles for scattering light have a refractive index that is at least 0.02 units different from the refractive index of the matrix. Typically the difference between the refractive indices of the particles and the transparent polymeric material or the matrix, respectively, is between 0.01 and 0.122, in particular between 0.01 and 0.03.

In a particular embodiment, the refractive index of the particles is higher than the refractive index of the transparent polymeric material in which they are dispersed, for example at least 0.01 higher or at least 0.02 units higher than the refractive index of the transparent polymeric material.

In a particular embodiment of the present invention, the light scattering particles are distributed in the transparent polymeric material in an amount of 0.01% to 20% by weight of the transparent polymeric material. For example, the particles for scattering light are distributed in the matrix in an amount of 0.01 % to 20% by weight of the transparent polymeric material. Generally, the particles for scattering light have an average diameter (number average) of between 1 $\mu$m and 50 $\mu$m, and more preferably of between 2 $\mu$m and 20 $\mu$m.

In an embodiment of the invention the transparent polymeric material of the light guide matrix comprises at least one of polymethylmethacrylate, polycarbonate, polyester and mixtures thereof. Further, the light scattering particles may be polymeric as well and may comprise at least one of polymethylmethacrylate, polycarbonate, polyester and mixtures thereof.

Generally polymeric materials that may be used as transparent polymeric material of the light guide include thermoplastic polymers such as polycarbonates, polymethacrylates such as polymethylmethacrylate, polyolefins such as polyethylene and polypropylene, polyesters such as polyethyleneterephthalates and polyethylenenaphthalates, cellulose acetate, polyvinyl chloride and terpolymers of acrylonitrile, styrene and butadiene.

The light source used for illuminating the light guide along one or more of its side faces may comprise LEDs which may for example be arranged in a linear array. For example, the LEDs are typically arranged on a printed circuit board and while common 180 degree emitting LEDs may be used, it may be desirable to use so-called side emitting LEDs that emit light at 90 degree, i.e in parallel to the printed circuit board on which they are provided. This offers the advantage that upon bending of the light device around the short axis of the major surface of the printed circuit board, an undue amount of stress in the printed circuit board is avoided as the printed circuit board will be arranged in parallel to the light guide.

It will generally also be preferred that the printed circuit board on the side facing the light guide is provided with a reflective surface at least to the extent the printed circuit board overlaps with the light guide. Thus, a reflective surface is preferably provided on the side of the printed circuit board where the LEDs are arranged. To provide a reflective surface on the printed circuit board, it may be coated with a reflective paint or a reflective film may be provided thereon. The reflective surface may be either mirror reflective or diffuse reflective. Alternatively and instead of providing the printed circuit board with a reflective surface, the light guide may be provided with a reflective layer (facing the light guide) where the printed circuit board overlaps with the light guide. Nevertheless, it will generally be more cost effective to provide the reflective surface on the printed circuit board.

In an alternative embodiment use of optical fiber technology may be made to provide for the light source. In one example several optical fibers may be arranged such that their end faces are located opposite to the side face of the light guide. As in the case of individual LEDs, the end faces of the optical fibers provide individual light emitting elements. In an alternative design, a light tube or the like optical fiber is located along at least one side face of the light guide, with light transmitted through the light tube exiting laterally therefrom.

A good and homogenous and energy-efficient light distribution in the light guide can usually be realized by coupling the light of individual light emitting elements to the light guide by means of optical lenses located at the side face of the light guide. The lens characteristic can be achieved by forming rounded notches in the side face of the light guide wherein each light emitting element has a separate notch associated thereto. These notches can receive the light emitting elements, i.e. the ends of optical fibers or the LEDs which can be either normal LEDs with rounded housings or surface mount device LEDs having a flat structure with a transparent covering material having also lens characteristics. Due to the lens characteristic at the side face of the light guide along which the light is coupled to the light guide, the light emitted from the light emitting elements and transmitted into the light guide will be spread within the light guide. Light reflected from the surface of the notches and the remaining areas of the side face of the light guide can be reflected back to the side face and notches by means of a side face reflector and arranged such that the light emitting elements are located between the light guide and the reflector.

In accordance with the present invention according to claim 1, a reflective layer is arranged on the second major side of the light guide. The reflective layer may be a specularly reflecting layer or can be a diffuse reflective layer. In one embodiment, the reflective layer may be provided directly on the light guide and in an alternative embodiment it may be provided separate therefrom. For example, the reflective layer may be coated on the light guide or the reflective layer may be a film, such as a diffuser film that is adhered to the light guide. In an alternative embodiment, the reflective layer may be provided as a loose film that is arranged between the light guide and for example a housing that may enclose the light guide. A particular suitable reflective layer includes a diffuser film commercially available from 3M under the designation "Light Enhancement Film 3635-100". Still further, a non-woven fibrous layer, for example similar to the fibrous layer on the first major side, may be used as a reflective layer on the second major side of the light guide. In particular variant of this embodiment, a pouch of fibrous material may be used into which the light guide typically together with a light source such as LEDs is inserted. Hence in this case, the light guide is substantially or completely enclosed by a fibrous layer. Such an embodiment may provide a particular cost effective way of producing the light device. In yet a further embodiment, when a housing is used, the reflective layer may be provided on the surface of the housing facing the second major side of the light guide as described below. Of course, it is also contemplated to use a combination of reflective layers on the second major side of the light guide. For example, in a particular embodiment, a diffuse or specular reflective film or coating may be combined with a fibrous layer. Thus, where a housing is used the reflective film or coating may be provided on the housing and a fibrous layer may be arranged between the housing and the light guide. Particular good luminance of the light device may thus be achieved.

Typically, the light guide, light source and translucent non-woven fibrous layer of the light device are held in a housing. For example, such a housing may have a transparent cover and an opposite back cover. The transparent cover is generally arranged over the translucent non-woven fibrous layer and typically will press the light guide against the back cover. One of the further advantages that may thus be provided with the use of the translucent fibrous layer on the first major side of the light guide is that it may provide for cushioning or vibration dampening such that the light source, for example LEDs are protected against vibrational shock. At the same time, the fibrous layer provides for an increased luminance. The back cover may be opaque or transparent. Also, the surface of the back cover of the housing facing the light guide may in one embodiment be reflective so as to provide for the reflective layer on the second major side of the light guide. For example, such reflectivity on the surface of the back cover may be provided through a reflective coating on the back cover, for example a white paint or a mirror reflective coating such as a metallic coating. In an alternative embodiment, reflectivity on the second major side may be provided through a separate reflective layer between the back cover and the light guide. In one embodiment, such a separate reflective layer may be a diffuser film or can be a further non-woven fibrous layer that can act as a diffuse reflector. Minimal thickness of the overall light device will generally be obtained by providing the back cover with a reflective surface.

Generally, it will be preferred to design the housing such that a desired flexibility is obtained. Thus, the housing may be a plastic pouch that is transparent or translucent where it covers the translucent fibrous layer. At the opposite side thereof, the back cover may be transparent, translucent or opaque. Also, as mentioned above, to provide the reflective layer on the second major side of the light guide, the back cover may be coated or otherwise provided with a reflective surface that faces the second major side of the light guide or alternatively, a separate reflective layer as described above may be provided between the light guide and the back cover.

In an alternative embodiment, the housing may be of a hard plastic, nevertheless, it would still be desired that such housing still has enough flexibility for example to follow a somewhat curved surface. Such might be accomplished by providing an elastomeric link between the back cover and the front cover at least along two opposite edges of the housing. Alternatively, back and front cover might be connected with an elastomer along the full circumference of the housing. Generally it will also be desired in these alternative embodiments that the front and back cover plates not be too thick so as to allow for enough flexibility of the light device. Also, as mentioned above, to provide the reflective layer on the second major side of the light guide, the back cover in these embodiments may be coated or otherwise provided with a reflective surface that faces the second major side of the light guide or alternatively, a separate reflective layer as described above may be provided between the light guide and the back cover.

In a particular embodiment, the light device may be used to illuminate a retroreflective sign. Accordingly, the light device may be provided with a transparent or semi-transparent retroreflective sheeting. Such a retroreflective sheeting is provided on the first major side of the light guide of the light device arranged such that the surface exhibiting retroreflective properties is oriented away from the light guide. In one embodiment, the retroreflective sheeting may be provided between the translucent non-woven fibrous layer and the front cover of the housing, if present. The retroreflective sheeting may be adhered with a suitable transparent adhesive to the cover of the housing or it may be provided within the housing without being adhered to the cover. In an alternative embodiment, the transparent or semi-transparent retroreflective sheeting may be arranged on top of the cover of the housing of the light device on its first major side. In this embodiment, the sheeting may be adhered to the cover or it may be part of a separate display panel that is removably mounted to the light device.

The retroreflective sheet for use with the present invention may be a semi-transparent or transparent sheet. A transparent retroreflective sheet for use in connection with the present invention may be a single layer sheet but is typically a multi-layer sheet. The retroreflective sheet may be a microsphere-based retroreflective sheet or a so-called cube corner based retroreflective sheet. Microsphere-based sheeting, sometimes referred to as "beaded sheeting", is well known in the art and includes a multitude of microspheres, for example glass or ceramic microspheres, typically at least partially embedded in a binder layer, and associated with specular or diffuse reflecting material. The reflective material should be provided functionally behind the microspheres. By "functionally behind" is meant that the reflective material is provided behind the microspheres in such a way that in conjunction with the microspheres light will be retroreflected. Typically, this means that the reflective material is directly provided on the microspheres or is slightly spaced away, through a space coat, from the microspheres to adjust to the focal point of the microspheres. Illustrative examples of microsphere-based sheeting are disclosed in U.S. Pat. Nos. 4,025,159 (McGrath); 4,983,436 (Bailey); 5,064,272 (Bailey); 5,066,098 (Kult); 5,069,964 (Tolliver); and 5,262,225 (Wilson).

The reflective material in one embodiment of this invention can be a reflective layer, for example a metal layer. A dielectric mirror may also be provided as the reflective layer or in combination with a metal layer. The dielectric mirrors may be similar to known dielectric mirrors disclosed in U.S. Pat. Nos. 3,700,305 and 4,763,985.

In using dielectric mirrors with microspheres, the microspheres typically have a refractive index n2 and have a layer of transparent material disposed thereon which has a refractive index n1. The opposite face of the transparent material having refractive index n1, is in contact with a material having a refractive index n3. Both n2 and n3 have a refractive index of at least 0.1, preferably at least 0.3, higher or lower than n1. The transparent material is a layer typically having an optical thickness corresponding to odd numbered multiples (that is, 1, 3, 5, 7 ... ) of about one-quarter wavelength of light in the wavelength range of about 380 to about 1,000 nanometers. Thus, either n2 >n1 <n3 or n2 <n1 >n3, and the materials on either side of the transparent layer may be either both higher or both lower in refractive index than n1. When n1, is higher than both n2 and n3, n1 is preferably in the 1.7 to 4.9 range, and n2 and n3 are preferably in the 1.2 to 1.7 range. Conversely, when n1 is lower than both n2 and n3, n1 is preferably in the 1.2 to 1.7 range, and n2 and n3 are preferably in the 1.7 to 4.9 range. The dielectric mirror preferably comprises a contiguous array of materials, at least one being in layer form, having an alternating sequence of refractive indices. In a preferred embodiment the contiguous array has from two to seven layers, preferably three to five layers. Desirably all are light transparent materials and are clear or essentially colorless to minimize light absorption. Among the many compounds that may be used in providing transparent materials within the desired refractive index range are: high index materials such as CdS, CeO2, CsI, GaAs, Ge, InAs, InP, InSb, $ZrO_2$, $Bi_2O_3$, ZnSe, ZnS, $WO_3$, PbS, PbSe, PbTe, RbI, Si, $Ta_2O_5$, Te, $TiO_2$; low index materials such as $Al_2O_3$, $AlF_3$, $CaF_2$, $CeF_3$, LiF,

$MgF_2$, NaCl, $Na_3AlF_6$, $ThOF_2$, elastomeric copolymers of perfluoropropylene and vinylidene fluoride et cetera. Other materials are reported in Thin Film Phenomena, K. L. Chopra, page 750, McGraw-Hill Book Company, New York, (1969). Preferred succeeding layers contain cryolite (Na3 AlF6) and zinc sulfide.

Dielectric mirrors or similar multi-layer reflective coatings can also be used in combination with cube corner sheeting as disclosed in e.g. JP 06-347622, US 6,172,810, US 6,224,219, US 6,243,201 and US 6,350,034.

In a particular embodiment, a semi-transparent retroreflective sheeting is used having a retroreflective side and an opposite rear side, the retroreflective sheeting having a regular or irregular two-dimensional pattern of transparent and opaque areas, the retroreflective material comprising a layer of transparent microspheres and a reflective layer located functionally behind said layer of transparent microspheres, the reflective layer comprising a regular or irregular two-dimensional pattern of metal areas of contiguous metal and open areas having substantially no metal, wherein open areas of the reflective layer correspond to transparent areas of the retroreflective sheeting and metal areas of the reflective layer correspond to opaque areas of the retroreflective material. The transparent microspheres are present in the transparent and opaque areas and the transparent areas comprise at least 5% of the total surface of the retroreflective sheeting on the retroreflective side. A semi-transparent retroreflective sheeting of this kind is disclosed in GB 2 433 637.

In another embodiment, the reflective sheeting used may be so-called cube corner sheeting. Cube corner sheetings, sometimes referred to as prismatic, microprismatic, triple mirror or total internal reflection sheetings, typically include a multitude of cube corner elements to retroreflect incident light. Cube corner retroreflectors typically include a sheet having a generally planar front surface and an array of cube corner elements protruding from the back surface. Cube corner reflecting elements include generally trihedral structures that have three approximately mutually perpendicular lateral faces meeting in a single corner, i.e. a cube corner. In use, such cube corner retroreflector is typically arranged with its front surface disposed generally toward the anticipated location of intended observers. Light incident on the front surface enters the sheet and passes through the body of the sheet to be reflected by each of the three faces of the elements, so as to exit the front surface in a direction substantially toward the source of the light incident on the front surface. In the case of total internal reflection, the air interface must remain free of dirt, water and adhesive and therefore is enclosed by a sealing film. Alternatively, reflective coatings may be applied on the lateral faces of the cube corners. Suitable reflective coatings that can be applied include transparent reflective metal layers or a dielectric mirror as described. When the cube corner elements are provided with a reflective coating they can also be used in a configuration where they are generally positioned towards the anticipated location of an intended observer.

Polymers for cube corner sheeting include polycarbonate, polymethylmethacrylate, polyethylene terephthalate, aliphatic polyurethanes, as well as ethylene copolymers and ionomers thereof. Cube corner sheeting may be prepared by casting directly onto a film, such as described in U.S. Patent No. 5,691,846 (Benson, Jr.). Polymers for radiation-cured cube corners include cross-linked acrylates such as multifunctional acrylates or epoxies and acrylated urethanes blended with mono- and multifunctional monomers. Further, cube corners may be cast on to plasticized polyvinyl chloride film for more flexible cast cube corner sheeting. These polymers are often employed for one or more reasons including thermal stability, environmental stability, clarity, excellent release from the tooling or mold, and capability of receiving a reflective coating.

In an embodiment of this invention the cube corner sheeting may have a further polymeric layer bonded to the side of the cube corner sheeting that has the cube corner elements so as to form a plurality of closed cells in which an air interface is provided to the cube corner elements. Illustrative examples of cube corner-based retroreflective sheeting are disclosed in U.S. Pat. Nos. 4,588,258 (Hoopman); 4,775,219 (Appledorn et al.); 4,895,428 (Nelson); 5,138,488 (Szczech); 5,387,458 (Pavelka); 5,450,235 (Smith); 5,605,761 (Burns); 5,614,286 (Bacon Jr.) and 5,691,846 (Benson, Jr.).

The light device may be used to illuminate indicia of a sign in case the indicia are arranged on the first major side of the light guide, in front of the translucent non-woven fibrous layer. The indicia may be provided on a film such that they contrast in transparency to the background of the film. Thus, in one embodiment, the film background can be opaque or translucent, with the indicia having a higher transparency than the background. In another embodiment, the indicia can be opaque or translucent such that they have a lower transparency than the background which can be clear transparent or translucent. In a further embodiment, the indicia can be provided as cut out areas in an opaque or translucent plate. In yet a further embodiment, the indicia may be provided as raised structures, for example by means of embossing or deep drawing.

In one particular embodiment, the indicia can form an integral part of a light device that includes a housing as described above. For example, the indicia may be provided on the cover of the housing, either on the side of the cover facing the light guide or on the opposite side. In this embodiment, the indicia can be printed or glued to the cover. It is also contemplated to provide the indicia on a separate film that may be provided between the cover of the housing of the light device and the translucent non-woven fibrous layer.

In another embodiment, the indicia may be provided on a separate carrier that can be removably attached to the light device.

In a particular embodiment, the light device is used to illuminate a license plate and thus to create an internally illuminated license plate. Typically, the license plate will include a retroreflective layer as described above so that light impinging on the license plate may be reflected therefrom in addition to the internal illumination. The license plate further includes at least indicia representing the licensed number and may include further indicia such as a country logo for example. Still further, the license plate has a shape and size as prescribed by the relevant country law or regulation. In one embodiment, the license plate may be an integral part of the light device. For example, the light device may include a housing as described above whereby the retroreflective layer and the indicia are provided in or on the light device. In one embodiment, the retroreflective layer and indicia may be arranged between the non-woven fibrous layer and the cover of the light device. In another embodiment, the indicia and optionally also the retroreflective layer may be attached to the outer surface of the cover of the light device, i.e. the surface of the cover that faces away from the translucent non-woven fibrous layer.

However, it will generally be preferred to arrange the license plate separate from the light device such that the license plate can be removably mounted thereto. Suitable license plates for this purpose have been disclosed in EP 1 512 583. Thus, such a license plate will typically have the shape and dimensions prescribed and will typically comprise a laminate of retroreflective film as described above and a transparent polymeric support plate. Generally, the retroreflective film and polymeric support plate are laminated to each other by means of a transparent adhesive. The indicia may be buried between the retroreflective film and the polymeric support plate or they can be provided on an outer surface of the laminate. Still further, the indicia in this embodiment may be printed or they can be provided as raised structures, in particular through embossing. Not all parts of the indicia need to be arranged on the same physical layer.

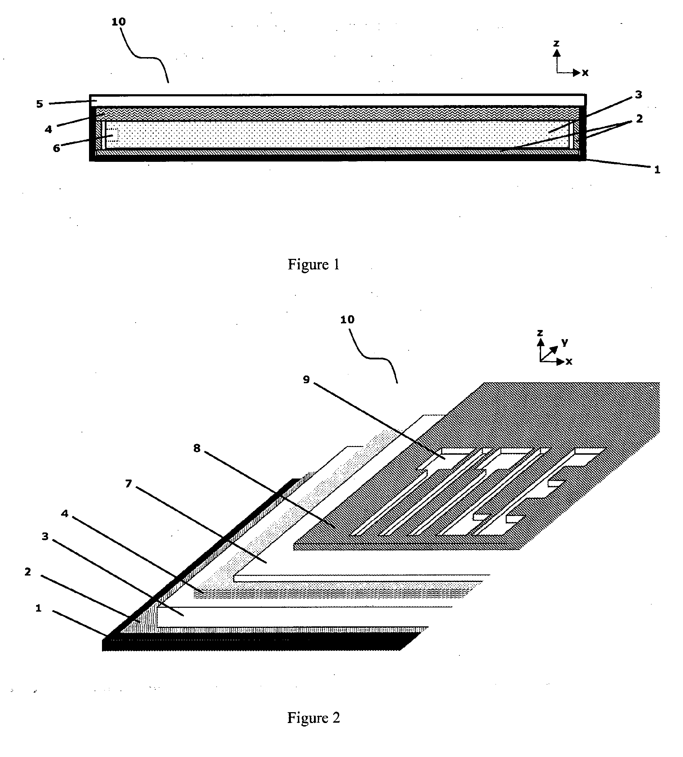

The invention according to claim 1 will now be described in more detail with reference to the following illustrative embodiments and examples, without the intention to limit the invention thereto. In figure 1 there is represented a cross-sectional view of a light device according to the present invention that includes a housing. Light device 10 in this figure includes a housing 1, for example in hard plastic. The housing 1 includes a back plate and upstanding ridges along the circumference of the back plate. Housing 1 is covered opposite to the back plate with a transparent cover plate 5. The back plate and upstanding ridges are typically opaque and may be of any color including black as well as white. Arranged on the inside of the housing 1 against its back plate and the upstanding ridges is a reflective layer 2, for example a white diffuser film. Within housing 1 is arranged a light guide 3 having a thickness of less than 3 mm, for example between 0.5 and 2 mm. Between the light guide 3 and cover plate 5 is arranged the translucent non-woven fibrous layer 4, preferably in a compressed state.

In figure 2 there is illustrated an embodiment where the light device is used to illuminate indicia so as to produce an illuminated sign 15. In the illustrated embodiment, the light device can be used to illuminate an indicia plate 8 from its back side. In this indicia plate 8, the indicia 9 are formed by areas that are less opaque than the other areas of the indicia plate 8. Fig. 2 shows schematically a sequence of layers that can be used to provide a light device and indicia plate according to this embodiment. For example, the indicia-forming areas 9 may be open areas in an opaque layer of material. In this specific example, a transparent or translucent cover plate 7 may be used between the non-woven fibrous material 4 and the indicia plate 8 to prevent the non-woven fibrous material 4 from being exposed to the environment through the open areas of the indicia plate 8. The cover plate 7 may also be coloured or printed with a pattern or an image, or it may carry an additional layer printed with such patterns or images, to provide special visual effects in certain parts or all of its visible surface.

EXAMPLES

In the following examples, the following materials were used:

1.1 Housing

The housing of the Light device of the examples surrounded the back face and the side faces of the light guide and left some space to accommodate other necessary components. The housing was used to protect the components of the Light device assembly (light guide, light-emitting diodes, reflective films, diffuser film, non-woven material, etc.) against mechanical impact, and also served to prevent movement of the individual components with respect to each other. In the present examples the housing was made of black polycarbonate.

1.2 Diffuser Film

A diffuser film was arranged between the light guide and the back plate of the housing. In the present examples, the diffuser film was a white PVC film with a matte, highly diffusive surface. It was available from 3M Company, St. Paul, Minnesota, U.S.A., under the designation "Light Enhancement Film 3635-100", hereinafter also referred to as "LEF". This film was about 0.15mm thick and had a pressure-sensitive adhesive.
In the present examples, diffuser film was used to cover all the interior surfaces of the housing.

1.3 Light Guide

The light guide employed for the light device of the present examples was a rectangular, 1.5 mm thin transparent panel with parallel major surfaces, approximately 12cm x 53cm in size, made from poly methyl methacrylate (PMMA), and it had minute scattering particles embedded that provide extraction of light coupled into the light guide by LEDs at one of its long edges. The light guide panel had at its one long edge concave openings which housed the LEDs.

Such a light guide material is available from company Evonik Röhm GmbH, headquartered in Darmstadt, Germany, under the trade name "PLEXIGLAS® EndLighten" in various thicknesses and with different concentrations of embedded scattering particles.

## 1.4 Non-woven material

A white, fibrous non-woven material was used, which was available from 3M Company, St. Paul, Minnesota U.S.A., under the designation "Thinsulate™ Type P". Specifically, the variety "P60" was used which had a weight of 60 grams per square meter (60 g/m2). The 3M™ Thinsulate™ P60 non-woven material consisted of a mixture of translucent polyester fibres having diameters of 2-50 microns, and the fibrous non-woven material in sheet form had, when uncompressed, a thickness of approximately 7 millimetres. It had on each of its two major surfaces a reinforcement provided by spraying a small amount of an acrylic polymer binder onto the non-woven material. In spite of this reinforcement, the non-woven material still had two fibrous major surfaces and individual fibres could be identified at these surfaces. The fibrous non-woven material appeared translucent when viewed against a light source.

## 1.5 Front Plate

A transparent front plate was used to close the housing of the light device, and this front plate was arranged essentially parallel to the front major surface of the light guide at a certain distance to this surface. The front plate consisted of a transparent polycarbonate panel, which was approximately 1 millimeter thick, and which had two smooth major surfaces.

## 1.6 Light-emitting diodes

A total of 8 light-emitting diodes ("LEDs"), arranged equidistantly at a long edge of the light guide, were used to generate white light that was coupled into the light guide. These LEDs were of the side-emitter type, and they were commercially available from company Nichia, based in Tokushima, Japan, under the designation NSSW088T.

## 2. Instruments used

## 2.1 Camera System

A digital camera was used to determine the average luminance value, averaged over the full area of the light-emitting surface of the light device. The measurement system of type LMK 2000, available from company TechnoTeam bv GmbH, of Ilmenau, Germany included the digital camera mentioned above, interface cards to a PC, and software for data acquisition, processing and output. The camera had a resolution of 1300 pixel columns and 1030 pixel rows, and it was equipped with a lens of 50mm focal length and had image angles of 9.9° in one direction, and 7.4° in the direction perpendicular to the first direction.

Data from the camera were acquired, processed, and output by the LMK 2000 software package in its version 3.7.0.1. This software was running on a dedicated personal computer, which produced colour-coded images of the luminance distribution and computed the average luminance of the entire surface. The luminance measurement system had been calibrated a few weeks before the example data were measured.

## 3. Measurement Methods

## 3.1 Measurement of Average Luminance

The camera was brought in front of the light device, so that the viewing direction of the camera was normal to the plane of the light device, in a way that the camera was "looking" straight at the light-emitting surface of the light device. The distance between the camera lens and the light device was approximately 6 meters.
A relative luminance measurement consisted of the luminance measuring device capturing an image of the light device, and the software making available to the user a colour-coded image of light intensities and a set of luminance data for $(x_i; y_i)$ coordinates in the image plane. Luminance values were output in candela per square meter (cd/m2).
Depending on the viewing distance, the apparent size of the light device in the field of view of the camera varied, and so did the number of camera pixels lying in the image of the light device. More than 50'000 pixels were used to compute the average luminance over the surface of the light device in the present examples.
The average luminance is the arithmetic average of all luminance data points measured over the surface area of the Light device assembly:

$$L_{avg} = (1/n) \sum_{i=1}^{n} L_i(x_i; y_i)$$

where

$L_{avg}$ is the average luminance,

n is the number of data points taken over the surface of the light device, typ. n $\geq$50'000,

Li is the Luminance value measured at coordinate point ($x_i$; $y_i$).

This value was calculated in the data acquisition and evaluation software of the LMK 2000 measurement system, running on a personal computer to which the camera was connected via a suitable interface card.

4. Test Results

4.1 Example 1

A light device was put together as shown in figure 1, starting with a light device housing as described above. The inner surface of the back plate of the housing was covered with a layer of diffuser film (LEF), and the diffuser film was also used to cover all other interior surfaces of the light device housing.

A light guide was provided with an electronic printed circuit board carrying LEDs as described above, and the related wiring and power supply. The combination of light guide and LEDs was arranged in the housing, over the layer of diffuser film.

A sheet of 3M Thinsulate™ non-woven fibrous material was then cut to size and was arranged over the front surface of the light guide, so that the non-woven material was in direct contact with the surface of the light guide.

Finally, the transparent front plate described above was put on top of the layer of non-woven material, and attached to the rim of the housing by means of an adhesive. The inner depth of the housing was about 2.7 mm, so that the layer of non-woven material was compressed to a thickness of about 1.2 mm when the front plate was attached to the rim of the housing.

The light device was then brought in front of the luminance camera described above, so that the camera was viewing perpendicularly at the front surface of the light device. The light device was switched on, and after a burn-in time of about 5 minutes luminance measurements were done. The average luminance of the light device, as described here, was calculated from 66250 individual data points and was computed to be 72.52 cd/m2.

4.2 Comparative Example C1

A second light device was put together, using identical components to the ones used in example 1: light device housing, diffuser film, light guide, LEDs, cabling and power supply. The only difference to the setup of example 1 was the absence of a layer of non-woven material of the first major side of the light guide.

The transparent front plate was thus applied to the rim of the housing, and nothing but an air gap was between the front surface of the light guide and the front plate.

This second light device was brought in front of the same luminance camera, so that the camera was viewing perpendicularly at the front surface of this light device. The light device was switched on, and after a burn-in time of about 5 minutes luminance measurements were done. The average luminance of the light device, as described in this comparative example, was calculated from 60400 individual data points and was computed to be 43.87 cd/m2.

**Claims**

1. Light device (10) comprising (i) a light guide (3) of transparent polymeric material having dispersed therein light scattering particles, said light guide (10) having opposite first and second major sides and one or more side faces there between and having a thickness of less than 3 mm, (ii) a light source arranged along at least a portion of at least one side face of the light guide (3), (iii) a reflective layer (2) arranged on the second major side of said light guide **characterized in that** a translucent non-woven fibrous layer (4) is arranged on said first major side of said light guide (3), wherein said light device (10) is adapted for illuminating indicia (9) representing a license plate number arranged on the first major side of said light device.

2. Light device according to claim 1 wherein said translucent non-woven fibrous layer (4) is in contact with the surface of said light guide (3) on said first major side and contiguous thereto.

3. Light device according to claim 1 or 2 wherein said reflective layer (2) arranged on said second major side comprises a non-woven fibrous layer.

4. Light device according to any of the previous claims wherein the weight of said translucent non-woven fibrous layer (4) is between 20 g/m$^2$ and 500 g/m$^2$.

5. Light device according to any of the previous claims wherein the translucent non-woven fibrous layer (4) comprises fibers selected from the group consisting of polymeric fibers, glass fibers, ceramic fibers, metal fibers and combinations thereof.

6. Light device according to any of the previous claims wherein said light guide (3), light source and translucent non-woven fibrous layer (4) are enclosed in a housing (1), said housing (1) having a transparent cover (5) arranged over said translucent non-woven fibrous layer (4) and a back cover arranged opposite to said transparent cover (5).

7. Light device according to claim 6 wherein the thickness of the light device (10) is less than 10 mm.

8. Light device according to claim 6 or 7 wherein said back plate comprises a reflective surface facing the second major side of said light guide (3).

9. Light device according to any of the previous claims wherein the light guide (3) has a thickness of not more 0.5 to 2 mm.

10. Light device according to any of the previous claims having further provided on the first major side a transparent or semi-transparent retroreflective sheeting.

11. Light device according to any of the previous claims wherein the light source comprises an array of light emitting diodes arranged on a printed circuit board and whereby the surface of the printed circuit board where the light emitting diodes are arranged is at least partially provided with a mirror or diffuse reflective layer.

12. License plate assembly comprising a light device as described in claim 10 and indicia representing a license plate number arranged on the first major side of said light device, and wherein said indicia and said transparent or semi-transparent retroreflective sheeting are comprised in a transparent or semi-transparent license plate that is removably mounted to the light guide.


**Patentansprüche**

1. Leuchte (10), aufweisend (i) einen Lichtleiter (3) aus durchsichtigem polymerem Material, in dem Licht streuende Partikel dispergiert sind, wobei der Lichtleiter (3) einander gegenüber liegende erste und zweite Hauptseiten und eine oder mehrere zwischen diesen liegende Seitenflächen von einer Dicke von weniger als 3 mm aufweist, (ii) eine entlang von wenigstens einem Teil von wenigstens einer Seitenfläche des Lichtleiters (3) angeordnete Lichtquelle, (iii) eine auf der zweiten Hauptseite des Lichtleiters angeordnete reflektierende Schicht (2), **dadurch gekennzeichnet, dass** eine lichtdurchlässige Vliesstoff-Schicht (4) auf der ersten Hauptseite des Lichtleiters (3) angeordnet ist, wobei die Leuchte (10) an ein Beleuchten von Zeichen (9) angepasst ist, die eine auf der ersten Hauptseite der Leuchte angeordnete Zulassungsschildnummer darstellen.

2. Leuchte nach Anspruch 1, wobei die lichtdurchlässige Vliesstoff-Schicht (4) Kontakt mit der Oberfläche des Lichtleiters (3) auf der ersten Hauptseite hat und gegen diese anliegt.

3. Leuchte nach Anspruch 1 oder 2, wobei die auf der zweiten Hauptseite angeordnete reflektierende Schicht (2) eine Vliesstoff-Schicht aufweist.

4. Leuchte nach einem der vorhergehenden Ansprüche, wobei das Gewicht der lichtdurchlässigen Vliesstoff-Schicht (4) zwischen 20 g/m$^2$ und 500 g/m$^2$ beträgt.

5. Leuchte nach einem der vorhergehenden Ansprüche, wobei die lichtdurchlässige Schicht (4) Fasern aufweist, die ausgewählt sind aus der Gruppe bestehend aus Polymerfasern, Glasfasern, Keramikfasern, Metallfasern und Kombinationen davon.

6. Leuchte nach einem der vorhergehenden Ansprüche, wobei der Lichtleiter (3), die Lichtquelle und die lichtdurchlässige Vliesstoff-Schicht (4) in einem Gehäuse (1) eingeschlossen sind, wobei das Gehäuse (1) einen über der lichtdurchlässigen Vliesstoff-Schicht (4) angeordneten, durchsichtigen Deckel (5) und einen auf der gegenüber liegenden Seite des durchsichtigen Deckels angeordneten rückseitigen Deckel (5) aufweist.

7. Leuchte nach Anspruch 6, wobei die Dicke der Leuchte (10) weniger als 10 mm beträgt.

8. Leuchte nach Anspruch 6 oder 7, wobei der rückseitige Deckel eine zur zweiten Hauptseite des Lichtleiters (3) gerichtete reflektierende Oberfläche aufweist.

9. Leuchte nach einem der vorhergehenden Ansprüche, wobei der Lichtleiter (3) eine Dicke von nicht mehr als 0,5 bis 2 mm aufweist.

10. Leuchte nach einem der vorhergehenden Ansprüche, die ferner auf der ersten Hauptseite mit einem durchsichtigen oder halbdurchsichtigen retroreflektierenden Belag bereitgestellt ist.

11. Leuchte nach einem der vorhergehenden Ansprüche, wobei die Lichtquelle eine Reihe von Licht emittierenden Dioden aufweist, die auf einer Leiterplatte angeordnet sind, und wobei die Oberfläche der Leiterplatte, wo die Licht emittierenden Dioden angeordnet sind, wenigstens teilweise mit einer Spiegel- oder einer diffus reflektierenden Schicht bereitgestellt ist.

12. Zulassungsschild-Baugruppe. aufweisend eine Leuchte gemäß Beschreibung in Anspruch 10 und Zulassungsschild-Nummer darstellende Zeichen, angeordnet auf einer ersten Hauptseite der Leuchte, und wobei die Zeichen und der durchsichtige oder halbdurchsichtige, retroreflektierende Belag in einem durchsichtigen oder halbdurchsichtigen, abnehmbar auf dem Lichtleiter angeordneten Zulassungsschild angeordnet sind.

**Revendications**

1. Dispositif lumineux (10) comprenant (i) un guide de lumière (3) en matériau polymère transparent avec des particules diffusant la lumière dispersées à l'intérieur de celui-ci, ledit guide de lumière (3) ayant des premier et deuxième côtés principaux opposés et une ou plusieurs faces latérales entre ceux-ci et ayant une épaisseur inférieure à 3 mm, (ii) une source de lumière disposée le long d'au moins une partie d'au moins une face latérale du guide de lumière (3), (iii) une couche réfléchissante (2) disposée sur le deuxième côté principal dudit guide de lumière, **caractérisé en ce qu'**une couche fibreuse non tissée translucide (4) est disposée sur ledit premier côté principal dudit guide de lumière (3), ledit dispositif lumineux (10) étant adapté pour éclairer des indices (9) représentant un numéro de plaque d'immatriculation disposés sur le premier côté principal dudit dispositif lumineux.

2. Dispositif lumineux selon la revendication 1 dans lequel ladite couche fibreuse non tissée translucide (4) est en contact avec la surface dudit guide de lumière (3) sur ledit premier côté principal et contiguë à celle-ci.

3. Dispositif lumineux selon la revendication 1 ou 2 dans lequel ladite couche réfléchissante (2) disposée sur ledit deuxième côté principal comprend une couche fibreuse non tissée.

4. Dispositif lumineux selon l'une quelconque des revendications précédentes dans lequel le poids de ladite couche fibreuse non tissée translucide (4) se situe entre 20 g/m$^2$ et 500 g/m$^2$.

5. Dispositif lumineux selon l'une quelconque des revendications précédentes dans lequel la couche fibreuse non tissée translucide (4) comprend des fibres choisies dans le groupe constitué par les fibres polymères, les fibres de verre, les fibres céramiques, les fibres métalliques et les combinaisons de celles-ci.

6. Dispositif lumineux selon l'une quelconque des revendications précédentes dans lequel lesdits guide de lumière (3), source de lumière et couche fibreuse non tissée translucide (4) sont contenus dans un boîtier (1), ledit boîtier (1) ayant un couvercle transparent (5) disposé par-dessus ladite couche fibreuse non tissée translucide (4) et une plaque arrière disposée à l'opposé dudit couvercle transparent (5).

7. Dispositif lumineux selon la revendication 6, l'épaisseur du dispositif lumineux (10) étant inférieure à 10 mm.

8. Dispositif lumineux selon la revendication 6 ou 7 dans lequel ladite plaque arrière comprend une surface réfléchissante faisant face au deuxième côté principal dudit guide de lumière (3).

9. Dispositif lumineux selon l'une quelconque des revendications précédentes dans lequel le guide de lumière (3) a une épaisseur ne dépassant pas 0,5 à 2 mm.

10. Dispositif lumineux selon l'une quelconque des revendications précédentes étant en outre pourvu sur le premier côté principal d'une feuille rétroréfléchissante transparente ou semi-transparente.

11. Dispositif lumineux selon l'une quelconque des revendications précédentes dans lequel la source de lumière comprend un réseau de diodes électroluminescentes disposées sur une carte de circuit imprimé, la surface de la carte de circuit imprimé où sont disposées les diodes électroluminescentes étant au moins partiellement pourvue d'une couche de réflexion miroir ou diffuse.

12. Ensemble plaque d'immatriculation comprenant un dispositif lumineux selon la revendication 10 et des indices représentant un numéro de plaque d'immatriculation disposés sur le premier côté principal dudit dispositif lumineux, et dans lequel lesdits indices et ladite feuille rétroréfléchissante transparente ou semi-transparente sont contenus dans une plaque d'immatriculation transparente ou semi-transparente qui est montée de façon amovible sur le guide de lumière.

Figure 1

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1477368 A
- US 20030128549 A
- EP 1512583 A
- WO 2007092152 A
- US 4025159 A, McGrath
- US 4983436 A, Bailey
- US 5064272 A, Bailey
- US 5066098 A, Kult
- US 5069964 A, Tolliver
- US 5262225 A, Wilson
- US 3700305 A
- US 4763985 A
- JP 6347622 A
- US 6172810 B

- US 6224219 B
- US 6243201 B
- US 6350034 B
- GB 2433637 A
- US 5691846 A, Benson, Jr.
- US 4588258 A, Hoopman
- US 4775219 A, Appledorn
- US 4895428 A, Nelson
- US 5138488 A, Szczech
- US 5387458 A, Pavelka
- US 5450235 A, Smith
- US 5605761 A, Burns
- US 5614286 A, Bacon Jr.

**Non-patent literature cited in the description**

- **K. L. CHOPRA.** Thin Film Phenomena. McGraw-Hill Book Company, 1969, vol. 750